# EUROPÄISCHE PATENTSCHRIFT

(11) **EP 2 347 491 B1**
(45) Veröffentlichungstag und Bekanntmachung des Hinweises auf die Patenterteilung: **28.12.2016**
(21) Anmeldenummer: 09783556.5
(22) Anmeldetag: 29.09.2009
(51) Int. Cl.: H02J 3/06, H02M 5/40

(54) **VORRICHTUNG ZUR SPEISUNG EINES ABNEHMERNETZES MIT DER ELEKTRISCHEN LEISTUNG EINES VERSORGUNGSNETZES**
DEVICE FOR FEEDING A CONSUMER NETWORK WITH THE ELECTRIC POWER OF A SUPPLY NETWORK
DISPOSITIF POUR ALIMENTER UN RÉSEAU DE CONSOMMATEURS EN ÉNERGIE ÉLECTRIQUE FOURNIE PAR UN RÉSEAU D'ALIMENTATION

(30) Priorität: 27.10.2008 DE 102008053822
(43) Veröffentlichungstag der Anmeldung: 27.07.2011
(73) Patentinhaber: Siemens Aktiengesellschaft, 80333 München (DE)
(72) Erfinder: KREBS, Uwe, 96114 Hirschaid (DE); MOSER, Jürgen, 91369 Wiesenthau (DE)
(86) Internationale Anmeldenummer: PCT/EP2009/062622
(87) Internationale Veröffentlichungsnummer: WO 2010/049231

(56) Entgegenhaltungen:
- WO-A1-2008/133733
- DE-A1- 3 536 448
- DE-A1-102006 050 289
- DE-C1- 3 833 719

## Beschreibung

Verfahren zur Speisung eines Abnehmernetzes mit der elektrischen Leistung eines Versorgungsnetzes und Vorrichtung

Die Erfindung betrifft ein Verfahren zur Speisung eines Abnehmernetzes mit elektrischer Leistung eines Versorgungsnetzes.

Ein solches Verfahren ist aus der DE 10 2005 004 628 A1 bereits bekannt und ist vorgesehen zum Betreiben der dort beschriebenen Vorrichtung zur Energieversorgung von im Hafen liegenden Schiffen. Im Hafen liegende Schiffe werden in der Regel von laufenden Dieselmotoren mit Energie versorgt. Durch die Abgase der Dieselmotoren kommt es jedoch zu erheblichen Umweltbelastungen in den Hafenstädten. Mit Hilfe der gattungsgemäßen Vorrichtung kann die Energieversorgung von Land aus erfolgen. Auf Grund der in der Regel unterschiedlichen Spannungen, Netzfrequenzen, Sternpunktbehandlungen und dergleichen zwischen dem landseitigen Versorgungsnetz und dem Schiffsverteilungsnetz ist ein statischer Frequenzumrichter vorgesehen, mit dem die unterschiedlichen Netze gekoppelt werden können. Statische Umrichter weisen Leistungshalbleiter auf, mit denen die Umrichtung der Ströme und Spannungen ermöglicht ist. Der vorbekannten Vorrichtung haftet der Nachteil an, dass hohe Kurzschlussströme nicht über eine ausreichend lange Zeitdauer hinweg in das Schiffsverteilungsnetz eingespeist werden können. Die Leistungshalbleiterventile des Frequenzumrichters könnten sonst beschädigt oder gar zerstört werden. Eine ausreichend lange Einspeisung des Kurzschlussstromes ist jedoch zur Lokalisierung eines schiffsseitigen Kurzschlusses notwendig, um im Schiffverteilungsnetz das fehlerhafte Teilnetz vom restlichen Schiffsverteilungsnetz trennen zu können.

Die Erfindung betrifft ferner eine Vorrichtung zur Speisung eines Abnehmernetzes mit elektrischer Leistung eines Versorgungsnetzes, wobei die Vorrichtung einen Frequenzumrichter aufweist, der einerseits mit dem Versorgungsnetz und andererseits mit dem Abnehmernetz verbindbar ist, sowie eine Schalteinheit, die parallel zum Frequenzumrichter angeordnet und zum Überbrücken des Frequenzumrichters eingerichtet ist, und durch mit der Schalteinheit verbundene Steuerungsmittel.

Eine solche Vorrichtung ist aus der DE 10 2006 050 289 A1 bekannt.

Aus der EP1852951A1, der EP1623496B1 und der US7403364B2 sind Umrichter bekannt die für verschiedene Zwecke überbrückbar sind.

Aufgabe der Erfindung ist es daher ein Verfahren und eine Vorrichtung der eingangs genannten Art bereitzustellen, mit dem auch hohe Kurzschlussströme über eine ausreichend lange Zeitdauer hinweg für das Abnehmernetz bereitgestellt werden können, so dass ein Kurzschluss im Abnehmernetz lokalisiert und gezielt von dem restlichen fehlerfreien Abnehmernetz getrennt werden kann.

Die Erfindung löst diese Aufgabe durch ein Verfahren zur Speisung eines Abnehmernetzes mit der elektrischen Leistung eines Versorgungsnetzes, wobei das Versorgungsnetz über einen Frequenzumrichter und eine zum Überbrücken des Frequenzumrichters eingerichtete Schalteinheit mit dem Abnehmernetz verbunden ist, bei dem der in das Abnehmernetz eingespeiste Strom auf ein Kurzschlusskriterium hin überwacht wird, wobei bei Erfüllen des Kurzschlusskriteriums die Schalteinheit zum Überbrücken des Frequenzumrichters geschlossen wird und bei Betätigung der Schalteinheit der Frequenzumrichter mit einer Impulssperre belegt wird.

Die Erfindung löst diese Aufgabe ferner durch Steuerungsmittel, die bei Nachweis eines über den Frequenzumrichter fließenden Kurschlussstromes zum Betätigen der Schalteinheit eingerichtet sind, wobei die Vorrichtung bei dem oben beschriebenen Verfahren verwendet wird.

Erfindungsgemäß ist in Parallelschaltung zum Frequenzumrichter eine Schalteinheit bereitgestellt, mit der eine Überbrückung des Frequenzumrichters im Kurzschlussfall erfolgen kann. Zum Erkennen oder zum Nachweis eines Kurzschlussstromes, der über den Frequenzumrichter fließt, sind Steuerungsmittel vorgesehen, die neben dem Erkennen des Kurzschlussstromes an Hand eines vorgegebenen Kurzschlusskriteriums auch zur Betätigung der Schalteinheit eingerichtet sind. Der Kurzschlussstrom fließt nach der Betätigung der Schalteinheit zumindest auch über die Schalteinheit, die eine für den Kurzschlussstrom ausreichende Stromtragfähigkeit aufweist. Darüber hinaus ist die Schalteinheit im Rahmen der Erfindung eine so schnell schließende Schalteinheit, dass eine Beschädigung des Frequenzumrichters in Folge des einsetzenden Kurzschlussstromes sicher vermieden werden kann.

Der Frequenzumrichter ist im Rahmen der Erfindung bevorzugt ein statischer Frequenzumrichter. Statische Umrichter weisen keine sich bewegende Teile oder Komponenten sondern Leistungshalbleiterventile auf. Die Topologie des Frequenzumrichters ist im Rahmen der Erfindung grundsätzlich beliebig. So weist der statische Frequenzumrichter beispielsweise einen Gleichrichter sowie einen Wechselrichter auf, die gleichspannungsseitig miteinander verbunden sind. Gleich- und Wechselrichter im Bereich der Energieübertragung und -verteilung sind dem Fachmann auf diesem Gebiet bestens bekannt, so dass an dieser Stelle auf deren Aufbau nicht detailliert eingegangen zu werden braucht. In der Regel kommen Brückenschaltungen aus so genannten Leistungshalbleiterventilen zum Einsatz, wobei die Leistungshalbleiterventile mit einer Regelung verbunden und von dieser gezielt von einer Sperrstellung, in der ein Stromfluss über das Leistungshalbleiterventil unterbrochen ist, in eine Durchlassstellung überführbar sind, in der Stromfluss über das Leistungshalbleiterventil ermöglicht ist.

Die zweckmäßige Ansteuerung der Leistungshalbleiterventile durch die Steuerungseinheit oder besser Regelung ermöglicht die erwünschte Umrichtung. Als Gleichrichter und Wechselrichter, die beide gemeinsam auch als Umrichter bezeichnet werden, kommen beispielsweise zweistufige oder dreistufige Umrichter, aber auch so genannte Multi-Level-Umrichter im Rahmen der Erfindung in Betracht.

Der Frequenzumrichter ist zweckmäßigerweise für Hochspannungen und insbesondere für Spannungen zwischen 1 kV und 52 kV ausgelegt. Im Rahmen der Erfindung sind jedoch auch Frequenzumrichter einsetzbar, die für Spannungen oberhalb von 52 kV ausgelegt sind.

Zweckmäßigerweise sind die Steuerungsmittel mit dem Frequenzumrichter verbunden und zum Unterbrechen oder zum sonstigen Beeinflussen der Frequenzumrichtung des Frequenzumrichters eingerichtet. Gemäß dieser Weiterentwicklung wird beispielsweise im Zeitpunkt der Überbrückung des Frequenzumrichters durch die Schalteinheit auch der Betrieb des Frequenzumrichters unterbrochen. Die Betätigung der Schalteinheit und die Impulssperre erfolgt zeitlich so aufeinander abgestimmt, dass es weder zu einer Versorgungsunterbrechung im Abnehmernetz noch zu einer zeitgleichen Überlagerung von Strömen mit unterschiedlicher Frequenz kommt. Die Steuerungsmittel sind daher entweder Teil der Regelung des Frequenzumrichters oder mit dieser verbunden. Es belegen also die Steuerungsmittel beim Betätigen der Schalteinheit den Frequenzumrichter mit einer Impulssperre. Weist beispielsweise das Versorgungsnetz eine Frequenz von 50Hz, das Abnehmernetz hingegen im Normalbetrieb eine Frequenz von 60Hz auf, wird verhindert, dass das Abnehmernetz direkt mit dem 50Hz-Versorgungsnetz verbunden wird, während der Frequenzumrichter noch in das ein 60Hz-Abnehmernetz einspeist. Dies hätte unerwünschte Nachteile im Gefolge.

Zweckmäßigerweise umfasst die Schalteinheit steuerbare Leistungshalbleiter. Wie bereits weiter oben ausgeführt, muss die Schalteinheit ausreichend schnell schalten, um den Frequenzumrichter zu überbrücken, bevor die ansteigenden Kurzschlussströme die empfindlichen Leistungshalbleiterventile des Frequenzumrichters beschädigen können. Da mechanische Schalter in der Regel hierfür zu langsam schalten, kommen im Rahmen der Erfindung zweckmäßigerweise schnelle Halbleiterschalter in Betracht. Der Halbleiterschalter oder besser Leistungshalbleiterschalter ist beispielsweise über den Gate-Anschluss seiner Leistungshalbleiter mit den Steuerungsmitteln verbunden. Über ein einfaches Ansteuersignal sind die Steuerungsmittel somit in der Lage den Leistungshalbleiterschalter schnell von seiner Unterbrecherstellung in seine Durchgangsstellung zu überführen und somit einzuschalten. Die Leistungshalbleiter der Schalteinheit sind beispielsweise Thyristoren. Es kommen jedoch beliebige schaltbare Leistungshalbleiter im Rahmen der Erfindung in Betracht, die zumindest aktiv von ihrer Sperrstellung in ihre Durchgangstellung überführt werden können und die in der Lage sind, den auf der Abnehmerseite benötigten Kurzschlussstrom zerstörungsfrei zu führen. Mit anderen Worten weisen die schaltbaren Leistungshalbleiter eine ausreichend hohe Stromtragfähigkeit auf, um die zu erwartenden Kurzschlussströme über die notwendige Zeitdauer hinweg störungs- und zerstörungsfrei zu führen.

Gemäß einer bevorzugten Ausgestaltung der erfindungsgemäßen Vorrichtung sind Eingangsmesssensoren vorgesehen, die zum Erfassen von elektrischen Eingangsmessgrößen versorgungsnetzseitig des Frequenzumrichters eingerichtet sind, und Ausgangsmesssensoren, die zum Erfassen von elektrischen Ausgangsmessgrößen abnehmernetzseitig des Frequenzumrichters eingerichtet sind, wobei die Steuerungsmittel mit den Eingangsmesssensoren und den Ausgangsmesssensoren verbunden und das Betätigen der Schalteinheit so lange verzögern, bis eine ausgewählte Eingangsmessgröße und die entsprechende Ausgangsmessgröße die gleiche Phase aufweisen. Gemäß dieser vorteilhaften Ausgestaltung der Erfindung wird berücksichtigt, dass die Spannungen im Versorgungsnetz und in dem Abnehmernetz unterschiedliche Phasen aufweisen können. Um unkontrollierte Ausgleichströme beim Überbrücken des Frequenzumrichters zu vermeiden, wird seitens der Steuerungsmittel das Betätigen der Schalteinheit so lange verzögert, bis beidseitig des Frequenzumrichters gleichphasige Messgrößen vorliegen. Die Eingangsmessgrößen beziehungsweise Ausgangsmessgrößen sind zweckmäßigerweise die Eingangsspannung und die Ausgangsspannung, also die jeweils vorliegende Spannung im Abnehmernetz beziehungsweise die jeweils vorliegende Spannung im Versorgungsnetz. Erst wenn im Versorgungsnetz sowie im Abnehmernetz die Spannungen gleichphasig sind, kommt es zur Betätigung und somit zur Überbrückung des Frequenzumrichters durch die Steuerungsmittel.

Zweckmäßigerweise sind Eingangsanschlussmittel zum Verbinden der Vorrichtung mit dem Versorgungsnetz und möglicherweise auch Ausgangsanschlussmittel zum Verbinden der Vorrichtung mit dem Abnehmernetz vorgesehen. Als Eingangsanschlussmittel beziehungsweise Ausgangsanschlussmittel kommt beispielsweise ein üblicher Transformator in Betracht.

Das Kurzschlusskriterium ist beispielsweise ein einfaches Schwellenkriterium, mit anderen Worten wird der Strom abnehmernetzseitig oder eingangsnetzseitig auf seine Amplitude hin überwacht. Übersteigt die Amplitude des über den Frequenzumrichter fließenden Stromes einen vorgegebenen Schwellenwert über eine vorbestimmte Zeitdauer hinweg, wird auf das Vorliegen eines Kurzschlussstromes geschlossen. Kurzschlussströme übersteigen hinsichtlich ihrer Amplitude diejenigen des üblicherweise vorliegenden Nennstromes um ein Vielfaches. Ein Kurzschlusskriterium wäre beispielsweise dann erfüllt, wenn der gemessene Messstrom einen einstellbaren Schwellenwert, der zweckmäßiger Weise oberhalb des Nennstromes liegt, überschreitet. Bei einem weiteren beispielhaften Kurschlusskriterium gemäß der Erfindung wird neben dem reinen Laststrom, also neben dem vom Frequenzumrichter in das Abnehmernetz gespeisten Strom, zusätzlich die Ausgangsspannung überwacht. Der Quotient aus gemessener Spannung und gemessenem Strom stellt eine Impedanz dar. Für diese Impedanz wird gemäß dem beispielhaften erfindungsgemäßen Kurzschlusskriterium ein Impedanzschwellenwert definiert, dessen Unterschreitung als Kurzschlussereignis oder -kriterium gewertet wird.

Gemäß einer zweckmäßigen Ausgestaltung des erfindungsgemäßen Verfahrens werden wenigstens eine elektrische Eingangsgröße versorgungsnetzseitig des Frequenzumrichters und wenigstens eine elektrische Ausgangsgröße abnehmernetzseitig des Frequenzumrichters erfasst und die Phasen jeder Eingangsgröße mit den Phasen der entsprechenden Ausgangsgröße verglichen. Die Schalteinheit wird nach dem Vorliegen des Kurzschlusskriteriums erst bei Feststellung der Phasengleichheit zwischen Eingangsgröße und Ausgangsgröße, wie bereits weiter oben ausgeführt wurde, geschlossen.

Gemäß der Erfindung wird bei Betätigung der Schalteinheit der Frequenzumrichter mit einer Impulssperre belegt. Die Impulssperre bewirkt, dass die Leistungsüberbrückung über den Frequenzumrichter unterbrochen wird. Der Frequenzumrichter wird mit anderen Worten abgeschaltet, so dass eine Beschädigung der empfindlichen Leistungshalbleiter des Frequenzumrichters sicher vermieden ist. Die Betätigung der Schalteinheit und das Setzen der Impulssperre erfolgt beispielsweise gleichzeitig.

Zweckmäßigerweise wird nach der Überbrückung des Frequenzumrichters das Verstreichen einer Übertragungszeitdauer und/oder der Wegfall des Kurschlusskriteriums abgewartet, erst anschließend wird die Impulssperre des Frequenzumrichters aufgehoben, wobei der Umrichter sich vorher auf die im Abnehmernetz vorgefundene Frequenz neu synchronisiert. Danach wird die Schalteinheit zur Aufhebung der Überbrückung des Frequenzumrichters betätigt. Auf diese Weise wird ein einfaches Wiederherstellen der üblichen Betriebsweise der Vorrichtung beispielsweise nach Lokalisieren und Abschalten des Kurzschlusses möglich. Nach dem Aufheben der Überbrückung des Frequenzumrichters wird im Abnehmernetz mittels der Regelung des Frequenzumrichters nach und nach wieder der vor dem Kurzschluss herrschende Betriebspunkt angefahren, wobei beispielsweise eine Rampenfunktion zur Anwendung gelangt. Hierbei kann es sich beispielsweise um ein allmähliches Herstellen einer 60 Hz-Frequenz im Abnehmernetz handeln, dessen Frequenz nach der Überbrückung des Frequenzumrichters kurzzeitig der Frequenz des Versorgungsnetzes entsprach, beispielsweise 50 Hz.

Zweckmäßigerweise überprüfen die Überwachungsmittel, ob im Abnehmernetz Energie erzeugt wird, wobei die Überwachungsmittel bei Nachweis einer Energieerzeugung im Abnehmernetz das Betätigen der Schalteinheit verhindern. Auf diese Art und Weise wird überprüft, ob das Abnehmernetz ein Inselnetz ist. Inselnetze im Sinn dieser Erfindung zeichnen sich dadurch aus, dass diese über keinen eigenen Energieerzeuger verfügen. Wenn es sich bei dem Abnehmernetz um ein Inselnetz handelt, ist somit die gesamte Kurzschlussleistung von dem Frequenzumrichter aufzubringen. Weist das Abnehmernetz jedoch einen Energieerzeuger auf, beispielsweise wenn ein Schiffsgenerator des Abnehmernetzes noch nicht abgeschaltet ist, kann der Kurzschlussstrom von dem Generator bereitgestellt werden, ohne dass dieser den Frequenzumrichter belastet. In diesem Falle ist eine Überbrückung des Frequenzumrichters unnötig. Gemäß dieser vorteilhaften Ausgestaltung der Erfindung wird demnach festgestellt, ob das Abnehmernetz ein Inselnetz ist, und ein Überbrücken des Frequenzumrichters von den Steuerungsmitteln verhindert, wenn dies nicht der Fall ist.

Die Erfindung erstreckt sich neben dreiphasigen Anwendungen ausdrücklich auf Anordnungen mit beliebiger Phasenzahl.

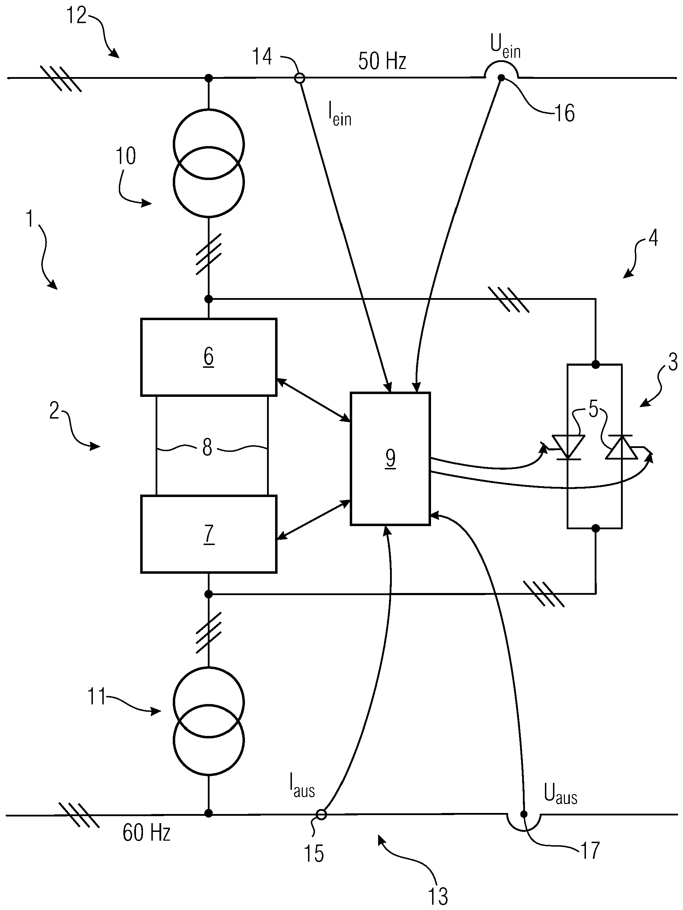

Weitere zweckmäßige Ausgestaltungen und Vorteil der Erfindung sind Gegenstand der nachfolgenden Beschreibung von Ausführungsbeispielen der Erfindung unter Bezug auf die Figur der Zeichnung, wobei die
- Figur: ein Ausführungsbeispiel der erfindungsgemäßen Vorrichtung schematisch verdeutlicht.

Die Figur zeigt ein Ausführungsbeispiel der erfindungsgemäßen Vorrichtung 1 in schematischer Darstellung.

Die Vorrichtung 1 umfasst einen Frequenzumrichter 2 und eine Schalteinheit 3, die zum Überbrücken des Frequenzumrichters 2 eingerichtet und in einem dreiphasigen Parallelzweig 4 parallel zum Frequenzumrichter 2 angeordnet ist. In der Figur ist aus Gründen der Übersichtlichkeit nur eine Phase dargestellt. Die drei kurzen Querstriche auf der dargestellten Phase sollen jedoch andeuten, dass es sich bei dem dargestellten Ausführungsbeispiel der erfindungsgemäßen Vorrichtung um eine dreiphasige Vorrichtung handelt. Grundsätzlich ist die Anzahl der Phasen der erfindungsgemäßen Vorrichtung jedoch beliebig. Die Schalteinheit 3 weist in jeder Phase des Parallelzweiges 4 zwei gegensinnig parallel geschaltete Leistungshalbleiterventile 5 auf, die jeweils beispielsweise über eine Reihenschaltung oder aber auch nur über einen einzigen Leistungshalbleiterbaustein, wie beispielsweise einen IGBT, einen GTO oder einen einfachen Thyristor, verfügt.

Der Frequenzumrichter 2 weist einen als Gleichrichter 6 betriebenen Umrichter sowie einen als Wechselrichter 7 betriebenen Umrichter auf, wobei der Gleichrichter 6 und der Wechselrichter 7 über eine Gleichspannungsverbindung 8 miteinander verbunden sind. Zur Regelung und zum Schutz der Umrichter 6, 7 sowie zum Betätigen der Leistungshalbleiter 5 der Schalteinheit 3 dient eine Steuerungseinheit 9, welche die eingangs beschriebenen Steuerungsmittel umfasst.

Die erfindungsgemäße Vorrichtung ist über einen Eingangstransformator 10 als Eingangsanschlussmittel sowie über einen Ausgangstransformator 11 als Ausgangsanschlussmittel mit einem 50Hz-Wechselspannung führenden Versorgungsnetz 12 sowie mit einem 60Hz-Wechselspannung führenden Abnehmernetz 13 verbunden. Bei dem Abnehmernetz 13 handelt es sich in dem in der Figur gezeigten Fall um ein Verteilungsnetz eines größeren Schiffes, das in einem Hafen liegt. Dabei ist das Schiffsverteilungsnetz 13 über den Frequenzumrichter 2 mit dem landseitigen Versorgungsnetz 12 verbunden. Der Frequenzumrichter ist daher notwendig, um die 50Hz-Spannung des Versorgungsnetzes 12 in die 60Hz-Spannung des Schiffsverteilungsnetzes 13 umzuwandeln.

Zur Regelung der Frequenzumwandlung und der Leistungsübertragung sowie der Betätigung der Schalteinheit 3 ist die Steuerungseinheit 9 mit versorgungsnetzseitigen Eingangsstromsensoren 14 sowie mit im Schiffsverteilungsnetz 13 angeordneten Ausgangsstrommesssensoren 15 verbunden. Darüber hinaus ist die Steuerungseinheit 9 mit versorgungsnetzseitigen Eingangsspannungsmesssensoren 16 sowie mit im Schiffsverteilungsnetz 13 angeordneten Ausgangsspannungsmesssensoren 17 verbunden. Sind alle Generatoren des Schiffes abgeschaltet, ist das Schiffsverteilungsnetz ein Inselnetz. In diesem Fall muss ein Kurzschlussstrom allein vom Frequenzumrichter 2 bereitgestellt werden. Um ein für die Fehlererkennung zu schnelles Abschalten des Frequenzumrichters zu verhindern, überwacht die Steuerungseinheit 9 mit Hilfe der Eingangsmesssensoren 14 und der Ausgangsstrommesssensoren 15 die Amplitude des über den Frequenzumrichter 2 fließenden Stromes. Wird von der Steuerungseinheit das Vorliegen eines Kurzschlusskriterium festgestellt, beispielsweise wenn der gemessene Strom einen zuvor festgelegten und in der Steuerungseinheit 9 implementierten Stromschwellenwert überschreitet oder eine unzulässige Impedanzunterschreitung im Abnehmernetz 13 nachgewiesen wird, betätigt die Steuerungseinheit 9 die Schalteinheit 3 und belegt den Frequenzumrichter 2 mit einer Impulssperre. Der Kurzschlussstrom fließt nun ausschließlich über den Parallelzweig 4. Um unkontrollierte Ausgleichströme zu vermeiden, schaltet die Steuerungseinheit 9 die Schalteinheit 3 jedoch erst dann ein, wenn die beidseitig der Schalteinheit auftretenden Spannungen die gleiche Phasenlage aufweisen. Dazu vergleicht die Steuerungseinheit 9 die versorgungsnetzseitigen Phasen der Spannung Uₑᵢₙ, die mittels der Eingangsspannungsnetzsensoren 16 erfasst werden, mit den abnehmernetzseitigen Spannungen Uₐᵤₛ, die mittels der Ausgangsspannungsmesssensoren 17 erfasst werden. Im Ausführungsbeispiel speist ein 50Hz-Versorgungsnetz ein 60Hz-Abnehmernetz. Daher kommt es automatisch alle 100ms zur Phasengleichheit der besagten Spannungen. Erst wenn eine solche Phasengleichheit der Spannungen an der Eingangs- beziehungsweise Ausgangsseitige des Frequenzumrichters 2 vorliegt, kommt es zur Betätigung der Schalteinheit 3 und somit zur Überbrückung des Frequenzumrichters 2, wobei der Frequenzumrichter 2 gleichzeitig mit einer Impulssperre belegt wird. Der Kurzschlussstrom fließt dann ausschließlich über die Schalteinheit 3, so dass eine Zerstörung der empfindlichen Halbleiterbauteile des Frequenzumrichters 2 vermieden ist. Das Abnehmernetz 13 nimmt nach der Überbrückung des Frequenzumrichters die Netzfrequenz des Versorgungsnetzes 12 an.

Nach dem Verstreichen einer Kurzschlusszeitdauer, in der die in der Figur nicht dargestellten Schutzgeräte des Abnehmernetzes 13 des Schiffes den Kurzschluss lokalisieren und abschalten, erkennt die Steuerungseinheit 9 über die Auswertung der Signale der angeschlossenen Sensoren 15 und 17 den Wegfall des Kurzschlusskriteriums. Die Steuerungseinheit 9 synchronisiert den Wechselrichter 7 auf die im Abnehmernetz 13 nun vorliegende Netzfrequenz und hebt die Impulssperre des Frequenzumrichters 2 auf. Der Frequenzumrichter 2 speist dann synchron zur Schalteinheit 3 in das Abnehmernetz 13. Erst anschließend kommt es zum Überführen der Schalteinheit 3 in ihre Unterbrecherstellung, so dass die Leistungsversorgung nunmehr ausschließlich über den Frequenzumrichter 2 erfolgt. Die Regelung des Wechselrichters 7 sorgt nach Abschalten der Schalteinheit 3 schließlich für ein allmähliches Wiederherstellen einer 60Hz-Wechselspannung im Abnehmernetz 13 mit Hilfe einer so genannten Rampenfunktion.

## Patentansprüche

1. Verfahren zur Speisung eines Abnehmernetzes (13) mit der elektrischen Leistung eines Versorgungsnetzes (12), wobei das Versorgungsnetz (12) über einen Frequenzumrichter (2) und eine zum Überbrücken des Frequenzumrichters (2) eingerichtete Schalteinheit (3) mit dem Abnehmernetz (13) verbunden ist, bei dem der in das Abnehmernetz (13) eingespeiste Strom auf ein Kurzschlusskriterium hin überwacht wird, wobei bei Erfüllen des Kurzschlusskriteriums die Schalteinheit (3) zum Überbrücken des Frequenzumrichters (2) geschlossen wird,
**dadurch gekennzeichnet, dass** bei Betätigung der Schalteinheit (3) der Frequenzumrichter (2) mit einer Impulssperre belegt wird.

2. Verfahren nach Anspruch 1,
**dadurch gekennzeichnet, dass**
- wenigstens eine elektrische Eingangsgröße Uₑᵢₙ versorgungsnetzseitig des Frequenzumrichters (2) und wenigstens eine elektrische Ausgangsgröße Uₐᵤₛ abnehmernetzseitig des Frequenzumrichters (2) erfasst werden,
- die Phasen der Eingangsgröße Uₑᵢₙ mit der Phase der Ausgangsgröße Uₐᵤₛ verglichen wird und
- die Schalteinheit (3) nach dem Vorliegen des Kurzschlusskriteriums erst bei Festestellen einer Phasenlagengleichheit zwischen Eingangsgröße Uₑᵢₙ und Ausgangsgröße Uₐᵤₛ geschlossen wird.

3. Verfahren nach Anspruch 1,
**dadurch gekennzeichnet, dass**
- nach der Überbrückung des Frequenzumrichters (2) der Wegfall des Kurzschlusskriteriums abgewartet,
- der Frequenzumrichter (7) sich auf die Frequenz des Abnehmernetzes (13) synchronisiert
- erst anschließend die Impulssperre des Frequenzumrichters (2) aufgehoben und
- danach die Schalteinheit (3) zur Aufhebung der Überbrückung des Frequenzumrichters (2) betätigt wird.

4. Verfahren nach einem der Ansprüche 1 bis 3,
**dadurch gekennzeichnet, dass** Überwachungsmittel überprüfen, ob im Abnehmernetz (13) Energie erzeugt wird, wobei die Überwachungsmittel bei Nachweis einer Energieerzeugung im Abnehmernetz (13) das Betätigen der Schalteinheit (3) verhindern.

5. Vorrichtung (1) zur Speisung eines Abnehmernetzes (13) mit elektrischer Leistung eines Versorgungsnetzes (12), wobei die Vorrichtung (1) einen Frequenzumrichter (2) aufweist, der einerseits mit dem Versorgungsnetz (12) und andererseits mit dem Abnehmernetz (13) verbindbar ist, sowie
eine Schalteinheit (13), die parallel zum Frequenzumrichter (2) angeordnet und zum Überbrücken des Frequenzumrichters (2) eingerichtet ist, und durch mit der Schalteinheit (3) verbundene Steuerungsmittel (9),
**dadurch gekennzeichnet, dass** die Steuermittel bei Nachweis eines über den Frequenzumrichter (2) fließenden Kurschlussstromes zum Betätigen der Schalteinheit (2) eingerichtet sind, und die Vorrichtung bei einem Verfahren nach einem der Ansprüche 1 bis 4 verwendet wird.

6. Vorrichtung (1) nach Anspruch 5,
**dadurch gekennzeichnet, dass** die Steuerungsmittel (9) mit dem Frequenzumrichter (2) verbunden und zum Unterbrechen oder zum sonstigen Beeinflussen
der Frequenzumrichtung des Frequenzumrichters (2) eingerichtet sind.

7. Vorrichtung (1) nach Anspruch 5 oder 6,
**dadurch gekennzeichnet, dass** die Schalteinheit (3) steuerbare Leistungshalbleiter (5) umfasst.

8. Vorrichtung (1) nach einem der Ansprüche 5 bis 7,
**gekennzeichnet durch**
- Eingangsmesssensoren (14,16), die zum Erfassen von elektrischen Eingangsmessgrößen (Iₑᵢₙ,Uₑᵢₙ) versorgungsnetzseitig des Frequenzumrichters (2) eingerichtet sind, und
- Ausgangsmesssensoren (15,17), die zum Erfassen von elektrischen Ausgangsmessgrößen (Iₐᵤₛ,Uₐᵤₛ) abnehmernetzseitig des Frequenzumrichters (2) eingerichtet sind,
- wobei die Steuerungsmittel (9) mit den Eingangsmesssensoren (14,16) und den Ausgangsmesssensoren (15,17) verbunden und das Betätigen der Schalteinheit (3) so lange verzögern, bis eine ausgewählte Eingansmessgröße (Uₑᵢₙ) und die entsprechende Ausgangsmessgröße (Uₐᵤₛ) die gleiche Phasenlage aufweisen.

9. Vorrichtung (1) nach einem der Ansprüche 5 bis 8,
**gekennzeichnet durch** Eingangsanschlussmittel (10) zum Verbinden der Vorrichtung mit dem Versorgungsnetz und/oder Ausgangsanschlussmittel (11) zum Verbinden der Vorrichtung mit dem Abnehmernetz.

10. Vorrichtung (1) nach einem der Ansprüche 5 bis 9,
**dadurch gekennzeichnet, dass** der Frequenzumrichter (2) Umrichter (6,7) aufweist, die gleichspannungsseitig miteinander verbunden sind, wobei jeder Umrichter (6,7) über ansteuerbare Leistungshalbleiterventile verfügt.

## Claims

1. Method for feeding a consumer network (13) with the electrical power from a power supply system (12), wherein the power supply system (12) is connected to the consumer network (13) via a frequency converter (2) and a switching unit (3) which is designed to bridge the frequency converter (2), in which the current fed into the consumer network (13) is monitored for a short-circuit criterion, with the switching unit (3) being closed if the short-circuit criterion is fulfilled in order to bridge the frequency converter (2), **characterized in that**
after operation of the switching unit (3), the frequency converter (2) has a pulse inhibitor applied to it.

2. Method according to Claim 1,
**characterized in that**
- at least one electrical input variable Uᵢₙ is detected on the power supply system side of the frequency converter (2), and at least one electrical output variable Uₒᵤₜ is detected on the consumer network side of the frequency converter (2),
- the phases of the input variable Uᵢₙ are compared with the phase of the output variable Uₒᵤₜ, and
- once the short-circuit criterion is satisfied, the switching unit (3) is closed only when it is found that the input variable Uᵢₙ and the output variable Uₒᵤₜ are in phase.

3. Method according to Claim 1,
**characterized in that**
- after bridging the frequency converter (2), the absence of the short-circuit criterion is waited for,
- the frequency converter (7) is synchronized to the frequency of the consumer network (13),
- only then is the pulse inhibitor of the frequency converter (2) canceled, and
- then the switching unit (3) is operated in order to cancel the bridging of the frequency converter (2).

4. Method according to one of Claims 1 to 3,
**characterized in that**
monitoring means check whether energy is being produced in the consumer network (13), with the monitoring means preventing the operation of the switching unit (3) if energy production is found in the consumer network (13).

5. Apparatus (1) for feeding a consumer network (13) with electrical power from a power supply system (12), wherein the apparatus (1) has a frequency converter (2) which can be connected on the one hand to the power supply system (12) and on the other hand to the consumer network (13), and
a switching unit (3), which is arranged in parallel with the frequency converter (2) and is designed to bridge the frequency converter (2), and control means (9), which are connected to the switching unit (3)
**characterized in that**
the control means are designed to operate the switching unit (2) when it is found that a short-circuit current is flowing via the frequency converter (2), and the apparatus is used in a method according to one of Claims 1 to 4.

6. Apparatus (1) according to Claim 5,
**characterized in that**
the control means (9) are connected to the frequency converter (2) and are designed to interrupt or to otherwise influence the frequency conversion of the frequency converter (2).

7. Apparatus (1) according to Claim 5 or 6,
**characterized in that**
the switching unit (3) comprises controllable power semiconductors (5).

8. Apparatus (1) according to one of Claims 5 to 7, **characterized by**
- input measurement sensors (14, 16), which are designed to detect electrical input measurement variables (Iᵢₙ, Uᵢₙ) on the power supply system side of the frequency converter (2), and
- output measurement sensors (15, 17), which are designed to detect electrical output measurement variables (Iₒᵤₜ, Uₒᵤₜ) on the consumer network side of the frequency converter (2),
- wherein the control means (9) are connected to the input measurement sensors (14, 16) and to the output measurement sensors (15, 17) and delay the operation of the switching unit (3) until a selected input measurement variable (Uᵢₙ) and the corresponding output measurement variable (Uₒᵤₜ) are at the same phase angle.

9. Apparatus (1) according to one of Claims 5 to 8,
**characterized by**
input connecting means (10) for connection of the apparatus to the power supply system and/or output connecting means (11) for connection of the apparatus to the consumer network.

10. Apparatus (1) according to one of Claims 5 to 9, **characterized in that**
the frequency converter (2) has converters (6, 7) which are connected to one another on the DC voltage side, with each converter (6, 7) having controllable power semiconductor valves.

## Revendications

1. Procédé d'alimentation d'un réseau (13) d'usagers en la puissance électrique d'un réseau (12) d'alimentation, le réseau (12) d'alimentation étant, par un convertisseur de fréquence et par une unité (3) de commutation agencée pour court-circuiter le convertisseur (2) de fréquence, relié au réseau (13) d'usagers dans lequel on contrôle le courant injecté dans le réseau (13) d'usagers par un critère de court-circuit, l'unité (3) de commutation étant, si le critère de court-circuit est satisfait, fermée pour court-circuiter le convertisseur (2) de fréquence,
**caractérisé en ce que**, lorsque l'unité (3) de commutation est actionnée, on impose un blocage des impulsions au convertisseur (2) de fréquence.

2. Procédé suivant la revendication 1,
**caractérisé en ce que**
- on détecte au moins une grandeur Uₑᵢₙ électrique d'entrée du côté du réseau d'alimentation du convertisseur (2) de fréquence et au moins une grandeur Uₐᵤₛ électrique de sortie du côté du réseau d'usagers du convertisseur (2) de fréquence,
- on compare les phases de la grandeur Uₑᵢₙ d'entrée à la phase de la grandeur Uₐᵤₛ de sortie et
- on ne ferme l'unité (3) de commutation, après la présence du critère de court-circuit, que si l'on constate une égalité de position en phase entre la grandeur Uₑᵢₙ d'entrée et la grandeur Uₐᵤₛ de sortie.

3. Procédé suivant la revendication 1,
**caractérisé en ce que**
- après avoir court-circuité le convertisseur (2) de fréquence, on attend la disparition du critère de court-circuit,
- on synchronise le convertisseur (7) de fréquence à la fréquence du réseau (13) d'usagers,
- on ne supprime qu'ensuite le blocage des impulsions du convertisseur (2) de fréquence et
- on actionne ensuite l'unité (3) de commutation pour supprimer le court-circuit du convertisseur (2) de fréquence.

4. Procédé suivant l'une des revendications 1 à 3,
**caractérisé en ce que** les moyens de contrôle contrôlent si de l'énergie est produite dans le réseau (13) d'usagers, les moyens de contrôle empêchant, si une production d'énergie est détectée dans le réseau (13) d'usagers, l'actionnement de l'unité (3) de commutation.

5. Dispositif (1) d'alimentation d'un réseau (13) d'usagers en puissance électrique d'un réseau (12) d'alimentation, le dispositif (1) ayant un convertisseur (2) de fréquence, qui peut être relié, d'une part, au réseau (12) d'alimentation et, d'autre part au réseau (13) d'usagers, ainsi que une unité (13) de commutation, qui est montée en parallèle au convertisseur (2) de fréquence et qui est agencée pour court-circuiter le convertisseur (2) de fréquence et des moyens (9) de commande reliés à l'unité (3) de commutation,
**caractérisé en ce que**
les moyens de commutation sont agencés pour, à la détection d'un courant de court-circuit passant par le convertisseur (2) de fréquence, actionner l'unité (2) de commutation et le dispositif est utilisé dans un procédé suivant l'une des revendications 1 à 4.

6. Dispositif (1) suivant la revendication 5,
**caractérisé en ce que** les moyens (9) de commande sont reliés au convertisseur (2) de fréquence et sont agencés pour interrompre ou pour influencer d'une autre façon la conversion de fréquence du convertisseur (2) de fréquence.

7. Dispositif (1) suivant les revendications 5 ou 6, **caractérisé en ce que** l'unité (3) de commutation comprend des semiconducteurs (5) de puissance pouvant être commandés.

8. Dispositif (1) suivant l'une des revendications 5 à 7,
**caractérisé par**
- des capteurs (14, 16) de mesure d'entrée, qui sont agencés pour détecter des grandeurs (Iₑᵢₙ, Uₑᵢₙ) électriques de mesure d'entrée du côté du réseau d'alimentation du convertisseur (2) de fréquence et
- des capteurs (15, 17) de mesure de sortie, qui sont agencés pour détecter des grandeurs (Iₐᵤₛ, Uₐᵤₛ) électriques de sortie du côté du réseau d'usagers du convertisseur (2) de fréquence,
- dans lequel les moyens (9) de commande sont reliés aux capteurs (14, 16) de mesure d'entrée et aux capteurs (15, 17) de mesure de sortie et l'actionnement de l'unité (3) de commutation est retardé jusqu'à ce qu'une grandeur (Uₑᵢₙ) de mesure d'entrée soit sélectionnée et que la grandeur (Uₐᵤₛ) de sortie correspondante ait la même position de phase.

9. Dispositif (1) suivant l'une des revendications 5 à 8, **caractérisé par** des moyens (10) de connexion d'entrée pour relier le dispositif au réseau d'alimentation et/ou des moyens (11) de connexion de sortie pour relier le dispositif au réseau d'usagers.

10. Dispositif (1) suivant l'une des revendications 5 à 9, **caractérisé en ce que** le convertisseur (2) de fréquence comporte des convertisseurs (6, 7), qui sont reliés entre eux du côté de la tension continue, chaque convertisseur (6, 7) disposant de soupapes à semiconducteur de puissance pouvant être commandées.
